# EUROPÄISCHE PATENTSCHRIFT

(11) **EP 2 217 894 B1**
(45) Veröffentlichungstag und Bekanntmachung des Hinweises auf die Patenterteilung: **22.06.2011**
(21) Anmeldenummer: 08852891.4
(22) Anmeldetag: 03.10.2008
(51) Int. Cl.: G01G 21/28

(54) **LABORGERÄT MIT EINEM GESCHÜTZTEN ARBEITSRAUM**
LABORATORY DEVICE HAVING A PROTECTED WORKING SPACE
APPAREIL DE LABORATOIRE AVEC UN ESPACE DE TRAVAIL PROTÉGÉ

(30) Priorität: 19.11.2007 EP 07121016
(43) Veröffentlichungstag der Anmeldung: 18.08.2010
(73) Patentinhaber: Mettler-Toledo AG, 8606 Greifensee (CH)
(72) Erfinder: ZEISS, Siegfried, CH-8633 Wolfhausen (CH); NUFER, Bruno, CH-8308 Illnau (CH)
(86) Internationale Anmeldenummer: PCT/EP2008/063266
(87) Internationale Veröffentlichungsnummer: WO 2009/065662

(56) Entgegenhaltungen:
- EP-A- 1 055 381
- JP-A- 8 166 280
- JP-A- 10 253 434
- US-A- 4 700 793
- US-A- 4 705 187
- US-A- 6 129 237

## Beschreibung

Die Erfindung betrifft ein Laborgerät mit einem Arbeitsraum, einem eine Wägezelle enthaltenden Gehäuse und mit einem im Arbeitsraum angeordneten und mit der Wägezelle verbundenen Lastaufnehmer, sowie mit einem Boden, mit einer Abdeckung, mit einer Rückwand, mit einer Frontwand und mit zwei Seitenwänden, welche den Arbeitsraum gegen die Umgebung des Laborgeräts abgrenzen.

Laborgeräte dieser Art dienen beispielsweise als Analysewaagen in vielen Bereichen der Industrie, insbesondere in Labors von Forschungs- und Entwicklungsabteilungen, aber auch in der Produktion, beispielsweise in der Qualitätskontrolle.

In der US 4 700 793 A ist eine Analysewaage mit einem Arbeitsraum ausführlich beschrieben. Analysewaagen sind Waagen mit sehr hoher Auflösung. Demzufolge können bereits kleinste auf das Wägegut oder auf den Lastaufnehmer einwirkende äussere Einflüsse das Wägeresultat verfälschen. Die äusseren Einflüsse sind selten stabil und dies kann dazu führen, dass das genaue Gewicht des Wägeguts nicht ermittelt werden kann. Zum Schutz des Wägesystems vor Umgebungseinflüssen wird deshalb ein Arbeitsraum mit einem sogenannten Windschutz umschlossen.

Wie in der US 4 700 793 A dargestellt, weist der Windschutz einer Analysewaage meistens zwei schiebbare Seitenwände, gegebenenfalls auch eine schiebbare Abdeckung auf, da die Beschickung mit Wägegut üblicherweise von der Seite auf den Lastaufnehmer erfolgt, gegebenenfalls auch von oben. Die Frontwand ist üblicherweise mit dem Gehäuse der Waage starr verbunden und verleiht dem Windschutz durch seine Stützwirkung Stabilität. Wann immer möglich, werden "schneidende Verschlussmittel" bevorzugt, das heisst, dass beispielsweise schiebbare Seitenwände den schwenkbaren Seitenwänden vorgezogen werden. Die Verschlussmittel werden dann als "schneidend" bezeichnet, wenn sie beim Öffnen und Schliessen die Luft schneiden und dadurch sehr geringe Luftbewegungen verursachen. Dies hilft, dass die Luft im Innern des Arbeitsraums sehr rasch zur Ruhe kommt. Zudem wird die Luft im Arbeitsraum dadurch nur minimal umgeschichtet und es kann sich innerhalb des Arbeitsraums ein verhältnismässig stabiles Temperaturprofil über die Arbeitsraumhöhe ausbilden. Demgegenüber bewegen schwenkbare Verschlussmittel sehr grosse Luftmassen innerhalb des Arbeitsraums, es entsteht beim Öffnen und Schliessen kurzzeitig ein Druckunterschied zwischen dem Arbeitsraum und der Umgebung, dessen Ausgleich über Lecks im Windschutz erfolgt und dadurch auch wieder Luftbewegungen innerhalb des Arbeitsraums verursacht.

Ein Windschutz muss zudem eine formstabile Struktur aufweisen, damit störende Luftbewegungen in der Umgebung nicht die Wände deformieren und sich die Luftbewegungen infolge dieser Deformationen im Arbeitsraum fortsetzen.

Damit der Arbeitsraum und insbesondere die Seitenwände des Windschutzes besser gereinigt werden können, wird in der US 6 686 545 B2 ein Windschutz vorgeschlagen, dessen Frontwand und die Seitenwände mittels einer Schwenkbewegung aus einer formschlüssigen Verankerung gelöst und mittels einer anschliessenden Ziehbewegung von der Waage entfernt werden können. Die Abdeckung ist über eine Linearführung mit dem als Rückwand dienenden Waagengehäuse verbunden und kann horizontal über das Waagengehäuse geschoben werden, wodurch der Windschutz nach oben offen ist. Ferner kann auch die Abdeckung mittels einer Schwenkbewegung von der Linearführung getrennt werden.

Im Zuge der Einführung zeitoptimierter Arbeitsabläufe, werden vermehrt unterschiedliche Operationen miteinander oder nacheinander direkt im Arbeitsraum vorgenommen, ohne dass das Wägegut mehrere Male auf den Lastaufnehmer aufgelegt beziehungsweise vom Lastaufnehmer entfernt wird. Dies ist insbesondere bei der Herstellung von Lösungen oder Pulvermischungen der Fall. Die Ausgestaltung eines multifunktionalen Arbeitsraums wird beispielsweise in der US 6 603 081 B2 offenbart. Darin ist ersichtlich, dass eine Vielzahl von Gerätschaften wie beispielsweise Dosiereinheiten, Haltevorrichtungen für Entnahmegefässe und Zielgefässe, Schutzabdeckungen, Anzeigen und dergleichen mehr auf einen bestimmten Arbeitsablauf optimiert, temporär im Arbeitsraum installiert werden können. Dadurch wird eine Analysewaage zum ausschliesslichen Verwägen von Wägegütern zu einem multifunktionalen Laborgerät.

Die im Stand der Technik bekannten Windschutzvorrichtungen sind hauptsächlich auf eine Beschickung des Lastaufnehmers mit einem Wägegut beziehungsweise auf die Entfernung des Wägegutes nach dem Verwägen optimiert. Dies geschieht üblicherweise von der Seite her, wodurch ein serielles Verwiegen mehrerer Wägegüter optimal erfolgen kann, indem beispielsweise die zu verwiegenden Wägegüter von der linken Seite her auf den Lastaufnehmer aufgelegt werden und die verwogenen Wägegüter von der rechter Seite her vom Lastaufnehmer entfernt werden. Ferner kann auch von oben der Lastaufnehmer mit Wägegut beschickt werden, sofern die Abdeckung verschiebbar ist.

Die zunehmende Funktionalität der vorangehend beschriebenen Laborgeräte erfordert aber einen besseren Zugang zum Arbeitsraum. Die Aufgabe der vorliegenden Erfindung ist deshalb, einen Arbeitsraum mit einer verbesserten Zugänglichkeit während des Arbeitsprozesses zu schaffen.

Diese Aufgabe wird gelöst durch die Merkmale des unabhängigen Anspruchs 1.

Ein Laborgerät mit einem eine Wägezelle enthaltenden Gehäuse weist einen, durch einen Boden, durch eine Abdeckung, durch eine Rückwand, durch eine Frontwand und durch zwei Seitenwände begrenzten Arbeitsraum auf. Die beiden Seitenwände sind zwischen einer Offenstellung und einer Geschlossenstellung linear verschiebbar. Ferner ist im Arbeitsraum ein, mit der Wägezelle verbundener Lastaufnehmer angeordnet. Das Laborgerät weist mindestens eine Führungsvorrichtung auf, wobei mittels der Führungsvorrichtung die Frontwand oder mehrere, miteinander gekoppelte Bereiche der Frontwand, zwischen einer Offenstellung und einer Geschlossenstellung linear verschiebbar und verschwenkbar geführt sind. Dadurch, dass die Seitenwände verschiebbar sind und die erfindungsgemässe Frontwand verschiebbar und verschwenkbar ist, ist der Arbeitsraum von drei Wandseiten zugänglich, sofern die Seitenwände und die Frontwand gleichzeitig in der Offenstellung sind. Selbstverständlich können die Seitenwände und die Frontwand je nach Bedarf auch Zwischenstellungen zwischen der Offenstellung und der Geschlossenstellung einnehmen.

Die Zugänglichkeit von drei Seiten erleichtert das Arbeiten im Arbeitsraum erheblich. Mit dem Begriff der Zugänglichkeit von der Seite ist ausschliesslich die Zugänglichkeit zum Arbeitsraum über die durch die Seitenwände und die Frontwand freigegebenen Bereiche gemeint. Die weiter unten verwendeten Begriffe oben, unten, vorne, hinten, und Seite beziehen sich auf die Ausdehnungsrichtungen eines in gebräuchlicher Aufstellung betriebsbereiten Laborgeräts.

Der Schwenkwinkel der Frontwand zum Gehäuse oder die Schwenkwinkel einzelner Bereiche der Frontwand zum Gehäuse sind von der linearen Verschiebestrecke der Frontwand abhängig. Der Schwenkwinkel ist immer zwischen dem verschwenkenden Bereich der Frontwand und dem dazu korrespondierenden Teil des Gehäuses eingeschlossen. In der Geschlossenstellung der Frontwand beträgt der Schwenkwinkel immer 0° und definiert damit die räumliche Ausrichtung des korrespondierenden Teils des Gehäuses.

Die erfindungsgemässe Frontwand erfüllt ein lange unbefriedigtes Bedürfnis nach besserer Zugänglichkeit zum Arbeitsraum, welche die im Stand der Technik bekannten Ausführungen nicht bieten können. Dies deshalb nicht, weil Laborgeräte mit einem Arbeitsraum verschiedene Rahmenbedingungen erfüllen müssen. Zum einen dürfen die Dimensionen des Gerätes nicht zu gross sein, damit dieses nach wie vor in bereits vorhandene Laborarbeitsplätze eingefügt werden kann. Zum anderen muss der Zugang über die Seitenwände gewährleistet sein, da beispielsweise beim Einwägen von toxischen Substanzen die Frontwand als Schutzschild dienend geschlossen bleiben sollte.

Die zum Gehäuse verschiebbar und verschwenkbar ausgebildete Frontwand, deren Schwenkwinkel aufgrund der Auslegung der Führungsvorrichtung abhängig von der linearen Verschiebung ist, löst diese Anforderungen in Kombination mit den verschiebbaren Seitenwänden auf ideale Weise. Erstens ist der Arbeitsraum sehr gut zugänglich, weil die Frontwand in der Offenstellung keine der Seitenwände abdeckt und daher die Zugänglichkeit zum Arbeitsraum jederzeit von der Seite her ermöglicht. Zweitens wird die Luft durch die Kombination einer Linearbewegung mit einer Schwenkbewegung im Wesentlichen geschnitten und der Einfluss der die Luftwirbel verursachenden, reinen Schwenkbewegung minimiert. Drittens wird der notwendige Freiraum über dem Arbeitsraum durch gleichzeitiges Verschwenken der Frontwand, verglichen zu einem rein linearen Verschieben der Frontwand wesentlich reduziert, was zu wesentlich kleineren Bauhöhen, beispielsweise von Kapellen oder sogenannten Gloveboxes führt.

Sofern die Rückwand und der Boden des Arbeitsraums Wandteile des Gehäuses sind, ergibt dies nicht nur ein sehr kompaktes Laborgerät, sondern auch ein sehr formstabiler Arbeitsraum.

Die mindestens eine Führungsvorrichtung kann mindestens eine horizontal angeordnete Schwenkachse Y und/oder mindestens eine vertikal angeordnete Schwenkachse Z aufweisen. Selbstverständlich kann die mindestens eine Führungsvorrichtung sowohl eine horizontal als auch eine vertikal angeordnete Schwenkachse aufweisen.

In einer ersten Ausgestaltung des erfindungsgemässen Laborgeräts ist die Frontwand als plattenförmige, starre Einheit ausgebildet. Die Führungsvorrichtung der plattenförmigen Frontwand weist mindestens eine schwenkbare Linearführung, sowie mindestens ein, zwischen der Frontwand und dem Gehäuse angeordnetes und der Steuerung der Schwenkbewegung in Abhängigkeit der linearen Verschiebung dienendes Führungsmittel auf.

Vorzugsweise ist die mindestens eine schwenkbare Linearführung im Bereich einer Vorderkante oder im Bereich einer Seitenkante der Abdeckung angeordnet. Ferner kann das Führungsmittel eine Schwenklasche, eine Führungsschiene, ein Seilzug oder eine Führungsnut mit Führungskörper sein.

Die Koordination der Schwenkbewegung in Abhängigkeit der linearen Verschiebung der Frontwand muss aber nicht zwingend mit mechanischen Mitteln erfolgen. Sofern sowohl für die Schwenkbewegung als auch für die lineare Verschiebung der Frontwand je ein mechanisch voneinander getrennter Antrieb zur Verfügung steht, kann der Bewegungsverlauf der beiden Bewegungen beliebig gewählt und, falls es die Antriebssteuerung dieser Antriebe zulässt, auch beliebig verändert werden. Für solche Aufgaben eignen sich insbesondere die/ein piezoelektrisches Element aufweisenden Antriebe. Diese haben den Vorteil, dass wenig Platzbedarf für das Anbringen des Antriebs vonnöten ist. Der Antrieb ist klein und kompakt und kann daher an beliebiger Stelle untergebracht sein. Ein weiterer Vorteil besteht darin, dass elektrostatische Aufladungen des Antriebs beziehungsweise von Teilen desselben vermieden werden. Ferner weist der Antrieb keine magnetischen oder magnetisierbaren Teile auf, die in einer nach dem Prinzip der elektromagnetischen Kraftkompensation arbeitenden Wägezelle störend sein könnten.

Die mindestens eine schwenkbare Linearführung weist vorzugsweise ein Schwenklager und mindestens eine, der Linearführung der Frontwand dienende Führungsschiene, Führungsnut, Führungsrolle oder einen Führungskörper auf. In dieser Führungsnut wird eine Führungspartie der Frontwand umfasst. Idealerweise sind zwei schwenkbare Linearführungen vorhanden, welche zwei sich gegenüberliegende Kantenbereiche der Frontwand umfassen, so dass die Frontwand in den Linearführungen gefangen ist, aber trotzdem linear verschiebbar bleibt. Es ist ebenfalls denkbar, dass an mindestens einer Seite des Aufnahmeraums mindestens eine Führungsnut vorhanden ist und die Frontwand mittels mindestens zwei Führungskörpern in der Führungsnut geführt wird. Eine solche Ausführung weist die vorangehend beschriebene Merkmalskombination einer schwenkbaren Linearführung mit einem Führungsmittel ebenso auf und ist daher als Teil der Erfindung zu betrachten.

Um eine möglichst in horizontaler Richtung ortsfeste Verankerung der geschlossenen Frontwand zu erreichen, kann im Bereich der Vorderkante des Bodens eine der stabilen Fassung der Frontwand dienende, mit V- und/oder U- förmigem Einschnitt versehene Positionierungsleiste angeordnet sein.

In einer zweiten Ausgestaltung des erfindungsgemässen Laborgeräts kann die Frontwand einstückig um eine Biegeachse biegeelastisch biegbar, oder mehrteilig, mehrere gelenkig miteinander verbundene Lamellen aufweisend, ausgestaltet sein. Zur Führung einer solcherart ausgestalteten Frontwand kann das Laborgerät mindestens eine Führungsvorrichtung aufweisen, welche eine Führungsschiene oder eine Führungsnut aufweist. Diese Führungsschiene oder Führungsnut erstreckt sich entlang zweier, von einem Eckpunkt ausgehender Kanten des Arbeitsraumes. Im Bereich des Eckpunktes weist die Führungsschiene oder Führungsnut vorzugsweise nicht eine abrupte winklige Richtungsänderung, sondern eine Kurve auf. Die Führungsschiene oder Führungsnut ist derart ausgelegt, dass die Frontwand in der Offenstellung keine Seitenwand abdeckt und dadurch ein Öffnen der Seitenwand verhindert.

Um den Arbeitsraum noch besser vor Umwelteinflüssen zu schützen, können die Seitenwände und/oder die Abdeckung und/oder die Frontwand und/oder die Positionierungsleiste mit der Abdichtung des Arbeitsraums dienenden Dichtungen versehen sein. Ein derart abgedichteter Arbeitsraum kann gleichzeitig als Sicherheitsbarriere dienen, wenn beispielsweise mit giftigen Substanzen gearbeitet werden soll.

Vorzugsweise sind die Seitenwände und/oder die Abdeckung und/oder die Frontwand mit mindestens einem zugehörenden Antrieb verbunden. Dieser kann so konzipiert sein, dass sich alle Wände gleichzeitig öffnen.

Ferner könnte beispielsweise die Frontwand horizontal geteilt sein, wobei sich die obere Hälfte nach oben verschieben und um eine horizontale Schwenkachse nach hinten verschwenken lässt. Die untere Hälfte der Frontwand könnte mehrteilig ausgestaltet sein, wobei die Schwenkachse ebenfalls horizontal angeordnet ist und sich dadurch der untere Teil der Frontwand in einen Raum unterhalb des Bodens schieben lässt. Sinngemäss kann die vorangehend beschriebene Ausführung auch vertikal angeordnete Schwenkachsen aufweisen.

Einzelheiten des erfindungsgemässen Laborgeräts ergeben sich anhand der Beschreibung der in den Zeichnungen dargestellten Ausführungsbeispiele. Es zeigen:
- Figur 1: ein Laborgerät in dreidimensionaler Ansicht in einer ersten Ausführung mit einem geschlossen dargestellten Arbeitsraum, dessen Seitenwände linear und dessen Frontwand linear nach oben und gleichzeitig um eine horizontale Schwenkachse nach hinten zwischen einer Geschlossenstellung und einer Offenstellung verschwenkt werden können;
- Figur 2: das Laborgerät aus Figur 1 in einer Seitenansicht mit einem geöffnet dargestellten, von drei Seiten zugänglichen Arbeitsraum;
- Figur 3: ein Laborgerät in dreidimensionaler Ansicht in einer zweiten Ausführung mit einem Arbeitsraum, dessen Frontwand mehrteilig ausgebildet ist, wobei die Bereiche der Frontwand linear zur Seite beziehungsweise nach hinten verschoben, sowie gleichzeitig einzelne Bereiche um eine vertikale Schwenkachse verschwenkt werden können;
- Figur 4A: ein Teil einer einstückig, um eine Biegeachse biegeelastisch biegbar ausgebildeten Frontwand in Aufsicht;
- Figur 4B: der Teil der Frontwand aus Figur 4A im Schnitt;
- Figur 5A: ein Teil einer mehrteilig ausgebildeten Frontwand in Aufsicht, deren einzelne Lamellen durch biegeelastische Verbindungselemente miteinander verbunden sind;
- Figur 5B: der Teil der mehrteiligen Frontwand aus Figur 5A im Schnitt;
- Figur 6A: ein Teil einer mehrteilig ausgebildeten Frontwand in Aufsicht, deren einzelne Lamellen durch an den Lamellen ausgebildete Scharniere miteinander verbunden sind;
- Figur 6B: der Teil der mehrteiligen Frontwand aus Figur 6A im Schnitt.

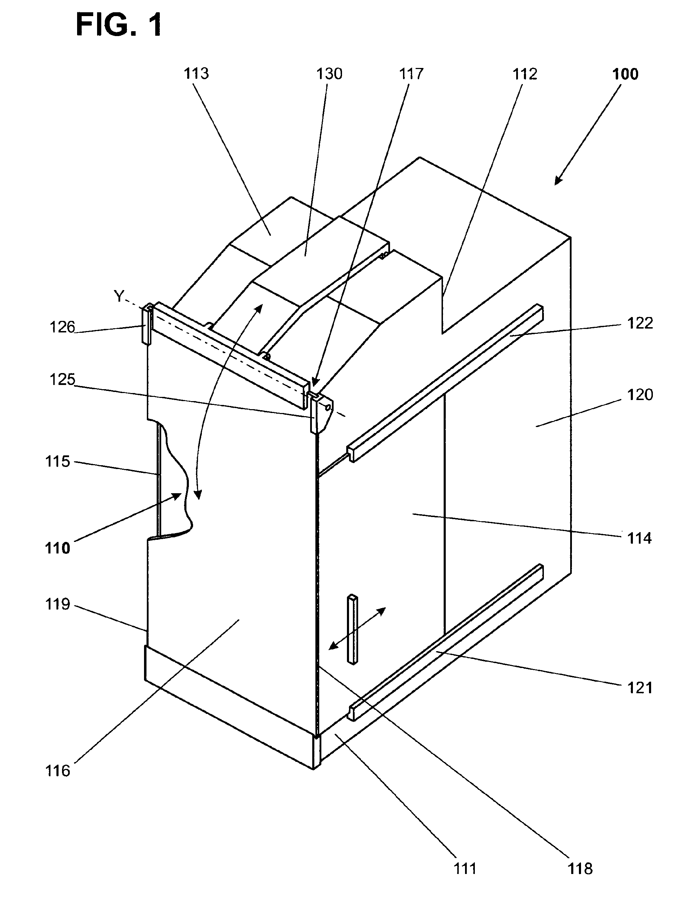

Figur 1 zeigt ein Laborgerät 100 in dreidimensionaler Ansicht in einer ersten Ausführung mit einem geschlossen dargestellten Arbeitsraum 110 und einem an den Arbeitsraum anschliessenden Gehäuse 120. Der Boden 111, die Rückwand 112 und die Abdeckung 113 des Arbeitsraumes 110 sind am Gehäuse 120 ausgebildet. Seitlich wird der Arbeitsraum 110 durch zwei in Schienen 121, 122 geführte, linear nach hinten verschiebbare Seitenwände 114, 115 begrenzt. Der Arbeitsraum 110 wird durch eine plattenförmig, starr ausgebildete Frontwand 116 gegen vorne abgegrenzt.

Die Frontwand 116 ist mittels zweier, schwenkbar mit dem Gehäuse 120 verbundener Linearführungen 125, 126 geführt und sind damit Teil einer Führungsvorrichtung für die Frontwand 116. Je eine der beiden Linearführungen 125, 126 ist im Eckbereich der Vorderkante 117 der Abdeckung 113 um eine horizontale Schwenkachse Y schwenkbar angeordnet, so dass zwei einander gegenüberliegende Kantenbereiche 118, 119 der Frontwand 116 mit den Linearführungen 125, 126 umfasst werden können. Damit die Frontwand 116 linear geführt werden kann, weisen die Linearführungen 125, 126 im Wesentlichen je eine U-förmig ausgebildete Längsnut auf, welche auf die Dimensionen der Kantenbereiche 118, 119 der Frontwand 116 abgestimmt ist. Dadurch dass die Frontwand über die Abdeckung geschwenkt wird, beeinträchtigt sie die

Zwischen der Frontwand 116 und dem Gehäuse 120 ist ein der Steuerung der Schwenkbewegung in Abhängigkeit von der Linearbewegung dienendes Führungsmittel 130 angeordnet. Das Führungsmittel 130 ist ebenfalls Teil der Führungsvorrichtung. Das Führungsmittel 130 in diesem Ausführungsbeispiel ist eine einfache Verbindungslasche, deren Enden gelenkig mit der Frontwand 116, beziehungsweise mit dem Gehäuse 120 verbunden sind. Die Gelenkachsen des Führungsmittels 130 sind parallel zur Schwenkachse Y der schwenkbaren Linearführungen 125, 126 angeordnet. Sobald die Frontwand 116 beispielsweise manuell oder mit Hilfe eines Antriebs linear nach oben verschoben wird, bewirkt das Führungselement 130, dass die Frontwand 116 gleichzeitig um eine horizontale Schwenkachse nach hinten verschwenkt. Selbstverständlich können an Stelle einer Verbindungslasche auch flexible Führungsmittel, beispielsweise ein Seilzug verwendet werden.

Ferner kann das Führungsmittel 130 anstelle einer Verbindungslasche auch aus mindestens eine Führungsnut und mindestens einem, in der Führungsnut geführter Bolzen bestehen. Diese Ausführung ist zwar in der Herstellung tendenziell teurer, aber die Bewegungsbahn der Frontwand 116 relativ zum Gehäuse 120 kann dadurch besser den räumlichen Umgebungsverhältnissen des Laborgeräts 100 angepasst werden. Es ist ebenfalls denkbar, dass an mindestens einer Seite mindestens eine Führungsnut vorhanden ist und die Frontwand 116 mittels mindestens zweier Bolzen in der Führungsnut geführt wird. Eine solche Ausführung weist die vorangehend beschriebene Merkmalskombination einer schwenkbaren Linearführung mit einem Führungsmittel ebenso auf und ist daher als Teil der Erfindung zu betrachten.

Zudem muss die Koordination der Schwenkbewegung in Abhängigkeit der linearen Verschiebung nicht zwingend mit mechanischen Mitteln erfolgen. Sofern sowohl für die Schwenkbewegung als auch für die lineare Verschiebung der Frontwand je ein separater Antrieb zur Verfügung steht, kann der Bewegungsverlauf der beiden Bewegungen beliebig gewählt und auch beliebig verändert werden, falls es die Antriebssteuerung, genauer die Steuer- und Regeleinrichtung dieser Antriebe, zulässt. Für solche Aufgaben eignen sich insbesondere die, ein piezoelektrisches Element aufweisenden Antriebe. Diese haben den Vorteil, dass wenig Platzbedarf für das Anbringen des Antriebs vonnöten ist. Der Antrieb ist klein und kompakt und kann daher an beliebiger Stelle untergebracht sein. Ein weiterer Vorteil besteht darin, dass elektrostatische Aufladungen des Antriebs beziehungsweise von Teilen desselben vermieden werden. Ferner weist der Antrieb keine magnetischen oder magnetisierbaren Teile auf, die in einer nach dem Prinzip der elektromagnetischen Kraftkompensation arbeitenden Wägezelle störend sein könnten.

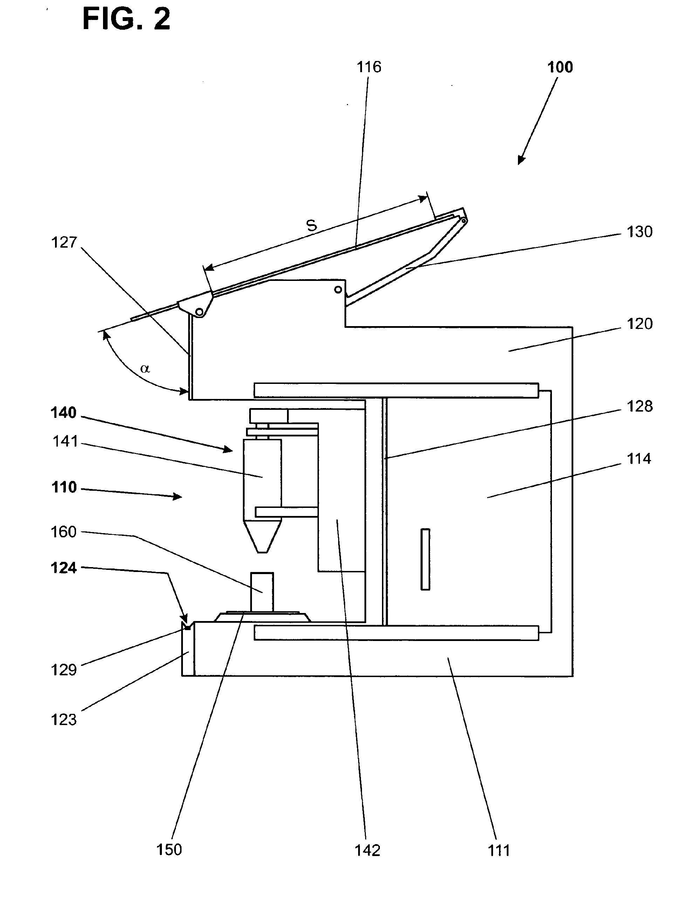

Die Figur 2 zeigt das Laborgerät 100 aus Figur 1 in einer Seitenansicht mit einem geöffnet dargestellten Arbeitsraum 110. Alle in Zusammenhang mit der Figur 1 beschriebenen Elemente weisen dieselben Bezugszeichen auf. Die nach oben verschobene und nach hinten verschwenkte Frontwand 116 sowie die nach hinten geschobenen Seitenwände 114, eine davon nicht sichtbar, geben den Blick auf die im Arbeitsraum 110 angeordneten Einrichtungen frei. Durch die erfindungsgemässe Frontwand 116 sind diese Einrichtungen von drei Seiten zugänglich, was das Arbeiten im Arbeitsraum 110 ausserordentlich verbessert und vereinfacht. Im Arbeitsraum 110 ist eine Dosiervorrichtung 140 vorhanden, deren Dosierkopf 141 oberhalb eines Lastaufnehmers 150 angeordnet ist. Der Lastaufnehmer 150 ist mit einer nicht dargestellten, im Gehäuse 120 untergebrachten Wägezelle wirkverbunden. Die Wägesignale der Wägezelle werden an eine Steuer- und Regeleinheit 142 weitergeleitet, mittels welcher der Auslassquerschnitt des Dosierkopfs 141 in Abhängigkeit des Wägesignals verändert werden kann. Zur Aufnahme des vom Dosierkopf 141 abgegebenen Dosierguts, ist auf dem Lastaufnehmer 150 ein Zielgefäss 160 angeordnet.

In Figur 2 ist klar ersichtlich, dass der minimal erforderliche Freiraum oberhalb des Laborgeräts 100 durch die Länge des Führungsmittels 130 definiert wird. Obwohl in Figur 2 die Frontwand lediglich in geöffneter Stellung dargestellt ist, ist klar erkennbar, dass der Schwenkwinkel α der Frontwand 116 zum Gehäuse 120, abhängig vom linearen Verschiebestrecke s der Frontwand 116 zum Gehäuse 120 ist.

Vorzugsweise sind möglichst viele den Arbeitsraum 110 abgrenzende Teile, insbesondere die Frontwand 116 und die Seitenwände 114, 115 sowie gegebenenfalls auch die Abdeckung 113 aus transparentem Material gefertigt, so dass der Arbeitsraum 110 auch in der Geschlossenstellung einsehbar ist.

Wie bereits weiter oben erwähnt, sollte der Arbeitsraum 110 möglichst formstabil ausgebildet sein. Um der Frontwand 116 in der Geschlossenstellung mehr Stabilität zu verleihen, kann im Bereich der Vorderkante des Bodens 111 eine Positionierungsleiste 123 angeordnet sein. Die Positionierungsleiste 123 weist eine V-förmige Nut 124 auf, in welcher bei geschlossener Stellung die gegen den Boden 111 gerichtete Kante der Frontwand 116 ruht. Vorzugsweise weisen die gegen die Frontwand 116 gerichteten Kantenbereiche der Seitenwände 114, 115 Dichtungen 128 auf. Auch in der Nut 124 kann eine elastische Dichtung 129 angeordnet sein, welche nicht nur die gegen den Boden gerichtete Kante der Frontwand 116 abdichtet, sondern insbesondere bei einer manuellen Bedienung der Frontwand 116 den Aufprall in der Nut 124 dämpft. Ferner können auch Teile des Gehäuses 120 mit Dichtungen 127 versehen sein, um den Arbeitsraum 110 möglichst zur Umgebung des Laborgeräts 100 abzudichten. Die Abdichtung des Arbeitsraums 110 kann eine doppelte Funktion innehaben. Erstens werden das Wägesignal beeinflussende Luftströmungen dadurch vom Lastaufnehmer 150 und von Zielgefäss 160 ferngehalten. Zweitens dient die Einfassung und Abdichtung des Arbeitsraums 110 als Sicherheitsbarriere, wenn beispielsweise giftige, pulverförmige Substanzen im Arbeitsraum 110 dosiert werden sollen.

Selbstverständlich kann die vorangehend beschriebene erste Ausführung an Stelle der horizontal angeordneten Schwenkachse Y auch eine vertikal angeordnete Schwenkachse aufweisen, wobei die Frontwand 116 logischerweise nicht über die Abdeckung 113, sondern über eine Seitenwand 114, 115 nach hinten verschwenkt werden kann.

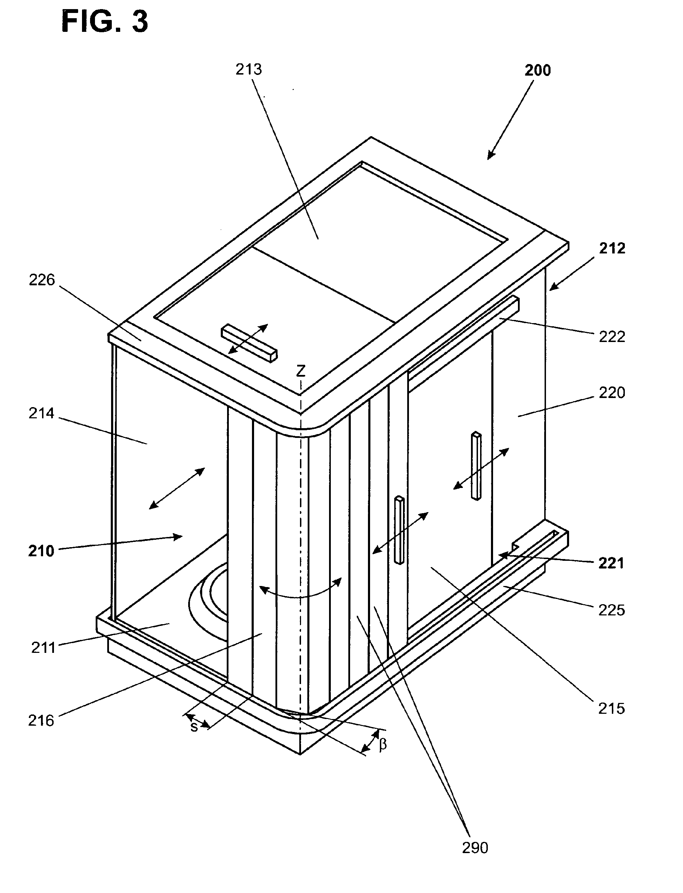

In Figur 3 ist ein Laborgerät 200 in dreidimensionaler Ansicht in einer zweiten Ausführung dargestellt, welches ebenfalls ein Gehäuse 220 und einen Arbeitsraum 210 aufweist. Der Boden 211, die Rückwand 212 und die Abdeckung 213 des Arbeitsraumes 210 sind am Gehäuse 220 ausgebildet. Seitlich wird der Arbeitsraum 210 durch zwei in Schienen 221, 222 geführte, linear nach hinten verschiebbare Seitenwände 214, 215 begrenzt. Der Arbeitsraum 210 wird ferner durch eine mehrteilig ausgebildete Frontwand 216 gegen vorne abgegrenzt. Diese besteht im Wesentlichen aus mehreren, miteinander gelenkig verbundenen Lamellen 290. Geführt wird die Frontwand 216 durch je eine am Boden 211 und an der Abdeckung 213 angeordnete und als Führungsvorrichtungen dienende Führungsschienen 225, 226. Diese Führungsschienen 225, 226 erstrecken sich entlang der Vorderkante und einer Seite des Laborgeräts 200. Sie weisen im Wesentlichen eine Führungsnut auf, in welchen an den Lamellen 290 angeordnete, in dieser Figur nicht dargestellte Führungskörper geführt sind. Je nach Ausführung und Stabilität kann selbstverständlich auch nur eine Führungsvorrichtung vorgesehen sein. Aus der Figur 3 ist klar ersichtlich, dass die Führungsnut der Frontwand 216 so konzipiert ist, dass die Frontwand 216 nur die in der Offenstellung befindliche Seitenwand 215 abdeckt und nicht den durch die Seitenwand 215 freigegebenen seitlichen Zugang zum Arbeitsraum 210.

Im Unterschied zur in Figur 2 dargestellten Frontwand, werden in Figur 3 nur einzelne Bereiche beziehungsweise Lamellen 290 der Frontwand 216 infolge der linearen Verschiebung s verschwenkt. Auch in der Figur 3 ist klar erkennbar, dass der Schwenkwinkel β der einzelnen Lamellen 290 zum Gehäuse 220 abhängig von der linearen Verschiebestrecke s der Frontwand 216 zum Gehäuse 120 ist.

Wie in Figur 3 dargestellt, können im Bereich der Seitenwand 214 die Schiene 221 und die Führungsschiene 225 in einem Teil ausgebildet sein. Bei der Kombination einer mehrteiligen, beziehungsweise mehrgliedrigen Frontwand 216 mit einer eine Führungsnut aufweisenden Führungsschiene 225, 226 lassen sich die Bereiche, beziehungsweise die Lamellen 290 der Frontwand 216, linear zur Seite beziehungsweise nach hinten verschieben, sowie gleichzeitig einzelne Bereiche um eine vertikale Schwenkachse Z verschwenken.

Es versteht sich von selbst, dass verschiedene Weiterentwicklungen dieses Konzepts denkbar sind, beispielsweise dass die Frontwand 216 in der Mitte in senkrechter Richtung in zwei Teile getrennt ist und der erste Teil zur rechten Seite und der zweite Teil zur linken Seite des Laborgeräts 200 geschoben werden kann. Ferner sind auch Ausführungen denkbar, bei welchen die einzelnen Bereiche um mindestens eine horizontale Schwenkachse verschwenkt werden können. Diese horizontale Schwenkachse kann sowohl im Bereich der Abdeckung 213, als auch im Bereich des Bodens 211 oder in beiden Bereichen angeordnet sein.

Ferner sind auch Kombinationen des in Figur 1 dargestellten Ausführungsbeispiels mit dem in Figur 3 dargestellten Ausführungsbeispiel durchaus möglich. So könnte beispielsweise die Frontwand horizontal geteilt sein, wobei sich die obere Hälfte wie in Figur 1 nach oben verschieben und nach hinten verschwenken lässt. Die untere Hälfte der Frontwand könnte analog der in Figur 3 beschriebenen Ausführung mehrteilig ausgestaltet sein, wobei die Schwenkachse horizontal angeordnet ist und sich dadurch der untere Teil der Frontwand in einen Raum unterhalb des Bodens schieben lässt.

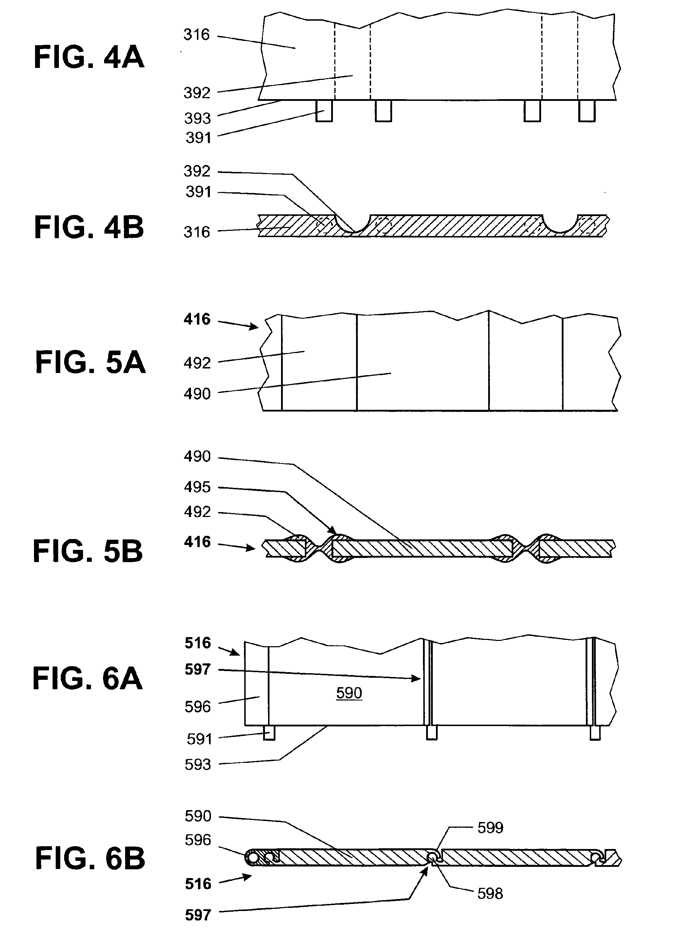

Figur 4 bis Figur 6 zeigen verschiedene Ausführungsvarianten mehrteiliger Frontwände, wie sie in dem in Figur 3 beschriebenen Laborgerät eingesetzt werden können.

In Figur 4A ist ein erstes Beispiel einer mehrere Bereiche aufweisenden Frontwand 316 dargestellt. Die nur zum Teil und in Aufsicht dargestellte Frontwand 316 ist einstückig, um eine Biegeachse elastisch biegbar ausgebildet. Damit die Frontwand 316 in senkrechter Richtung ausreichend biegesteif, aber um eine senkrecht angeordnete Schwenkachse biegbar ist, weist diese mehrere als Dünnstellenbiegelager ausgebildete, in senkrechte Richtung sich erstreckende Biegestellen 392 auf. Die Dünnstellenbiegelager 392 sind besser in Figur 4B ersichtlich, welche den Schnitt des in Figur 4A dargestellten Teilstücks der Frontwand 316 zeigt. Damit die Frontwand 316 in den Führungsmitteln ohne zu blockieren geführt werden kann, sind im Randbereich 393 der Frontwand 316 mehrere Führungskörper 391 angeordnet. Es versteht sich von selbst, dass solche Frontwände 316 nur aus elastischen Materialien gefertigt sein können, beispielsweise aus transparentem Kunststoff.

Figur 5A zeigt einen Teil einer mehrteilig ausgebildeten, zweiten Ausführung einer Frontwand 416 in Aufsicht, deren einzelne Lamellen 490 durch biegeelastische Verbindungselemente 492 miteinander verbunden sind. Eine solche Anordnung eignet sich insbesondere dann, wenn die einzelnen Lamellen 490 aus relativ unelastischen Materialien, beispielsweise aus Glas gefertigt sind. Der Aufbau der Frontwand 416 ist noch besser in Figur 5B einsehbar, welche die Frontwand 419 aus Figur 5A im Schnitt zeigt. Durch die gabelförmigen Fassungen der biegeelastischen Verbindungselemente 492 werden Lagerpunkte 395 gebildet, welche in den Führungen die Funktion von Führungskörpern aufweisen. Dadurch ist die Anbringung von zusätzlichen Führungskörpern nicht zwingend notwendig.

Figur 6A zeigt einen Teil einer mehrteilig ausgebildeten Frontwand 516 in Aufsicht, deren einzelne Lamellen 590 durch an den Lamellen 590 ausgebildete Scharniere 597 miteinander verbunden sind. Das Scharnier 597 ist, wie in Figur 6B, welche den Schnitt der in Figur 6A dargestellten Frontwand 516 zeigt, in einen Scharnierdorn 598 und in eine Scharnierklammer 599 aufgeteilt. Die Lamelle 590 ist zwischen dem Scharnierdorn 598 und der Scharnierklammer 599 angeordnet und mit diesen einstückig verbunden. Dadurch kann zur Herstellung der mehrteiligen Frontwand 516 ein einfaches Strangpressprofil verwendet werden, welches in gleich lange Stücke zersägt werden kann, wobei anschliessend die einzelnen Stücke ineinander geschoben werden können. Ferner kann ein im Randbereich 593 angeordneter Führungskörper 591 aus einem Teilbereich des Scharnierdorns 598 gefertigt, oder mit diesem fest verbunden sein. Des Weiteren weist die Frontwand 516 an ihrer abschliessenden Lamelle 590 eine elastische Dichtung 596 auf.

### Bezugszeichenliste

- 200, 100: Laborgerät
- 210, 110: Arbeitsraum
- 211, 111: Boden
- 212,112: Rückwand
- 213,113: Abdeckung
- 115, 114: Seitenwand
- 516,416,316,216,116: Frontwand
- 117: Vorderkante der Abdeckung
- 119, 118: Kantenbereich Frontwand
- 220, 120: Gehäuse
- 222, 221, 122, 121: Schiene
- 123: Positionierungsleiste
- 124: Nut
- 126, 125: schwenkbare Linearführung
- 596, 129, 128, 127: Dichtung
- 130: Führungsmittel
- 140: Dosiervorrichtung
- 141: Dosierkopf
- 142: Steuer- und Regeleinheit
- 150: Lastaufnehmer
- 160: Zielgefäss
- 226, 225: Führungsschiene
- 590,490,290: Lamelle
- 591, 391: Führungskörper
- 392: Biegestelle
- 593, 393: Randbereich
- 492: biegeelastisches Verbindungselement
- 495: Lagerpunkt
- 597: Scharnier
- 598: Scharnierdorn
- 599: Scharnierklammer
- Y: horizontale Schwenkachse
- Z: vertikale Schwenkachse
- α, β: Schwenkwinkel s lineare Verschiebestrecke

## Patentansprüche

1. Laborgerät (100, 200) mit einem eine Wägezelle enthaltenden Gehäuse (120, 220) und mit einem durch einen Boden (111, 211), durch eine Abdeckung (113, 213), durch eine Rückwand (112, 212), durch eine Frontwand (116, 216, 316, 416, 516) und durch zwei, zwischen einer Offenstellung und einer Geschlossenstellung linear verschiebbare Seitenwände (114, 115) begrenzten Arbeitsraum (110, 210), sowie mit einem im Arbeitsraum (110, 210) angeordneten und mit der Wägezelle verbundenen Lastaufnehmer (150), **dadurch gekennzeichnet, dass** das Laborgerät (100, 200) mindestens eine Führungsvorrichtung aufweist, wobei mittels der Führungsvorrichtung die Frontwand (116, 216, 316, 416, 516) oder mehrere, miteinander gekoppelte Bereiche der Frontwand (116, 216, 316, 416, 516) zwischen einer Offenstellung und einer Geschlossenstellung linear verschiebbar und verschwenkbar geführt sind, wodurch der Arbeitsraum (110, 210) von drei Wandseiten zugänglich ist, wenn die Seitenwände (114, 115) und die Frontwand (116, 216, 316, 416, 516) gleichzeitig zumindest in einer Zwischenstellung sind.

2. Laborgerät (100, 200) nach Anspruch 1, **dadurch gekennzeichnet, dass** der Schwenkwinkel (α, β) der Frontwand (116, 216, 316, 416, 516) zum Gehäuse (120, 220), oder die Schwenkwinkel (α, β) einzelner Bereiche der Frontwand (116, 216, 316, 416, 516) zum Gehäuse (120, 220) von der linearen Verschiebestrecke (s) der Frontwand (116, 216, 316, 416, 516) abhängig sind.

3. Laborgerät (100, 200) nach Anspruch 1 oder 2, **dadurch gekennzeichnet, dass** die Rückwand (112, 212) und der Boden (111, 211) des Arbeitsraums (110, 210), Wandteile des Gehäuses (120, 220) sind.

4. Laborgerät (100, 200) nach einem der Ansprüche 1 bis 3, **dadurch gekennzeichnet, dass** die mindestens eine Führungsvorrichtung mindestens eine horizontal angeordnete Schwenkachse Y aufweist.

5. Laborgerät (100, 200) nach einem der Ansprüche 1 bis 3, **dadurch gekennzeichnet, dass** die mindestens eine Führungsvorrichtung mindestens eine vertikal angeordnete Schwenkachse Z aufweist.

6. Laborgerät (100) nach einem der Ansprüche 1 bis 5, **dadurch gekennzeichnet, dass** die Frontwand (116) als plattenförmige, starre Einheit ausgebildet ist und die Führungsvorrichtung mindestens eine schwenkbare Linearführung (125, 126) der plattenförmigen Frontwand (116), sowie mindestens ein, zwischen der Frontwand (116) und dem Gehäuse (120) angeordnetes, der Steuerung der Schwenkbewegung in Abhängigkeit der linearen Verschiebung dienendes Führungsmittel (130) aufweist.

7. Laborgerät (100, 200) nach Anspruch 6, **dadurch gekennzeichnet, dass** die mindestens eine schwenkbare Linearführung (125, 126) im Bereich einer Vorderkante (117) oder im Bereich einer Seitenkante der Abdeckung (113) angeordnet ist.

8. Laborgerät (100, 200) nach Anspruch 6 oder 7, **dadurch gekennzeichnet, dass** das Führungsmittel (130) eine Schwenklasche, eine Führungsschiene, ein Seilzug oder eine Führungsnut mit Führungskörper ist.

9. Laborgerät (100, 200) nach Anspruch 6 oder 7, **dadurch gekennzeichnet, dass** das Führungsmittel (130) eine Antriebssteuerung ist, mittels welcher Antriebssteuerung die Schwenkbewegung eines Schwenkantriebs der Frontwand in Abhängigkeit der linearen Verschiebebewegung eines Linearantriebs der Frontwand steuerbar ist.

10. Laborgerät (100) nach einem der Ansprüche 6 bis 9, **dadurch gekennzeichnet, dass** die mindestens eine schwenkbare Linearführung (125, 126) ein Schwenklager und mindestens eine, der Linearführung der Frontwand (116) dienende Führungsschiene, Führungsnut, Führungsrolle oder einen Führungskörper aufweist.

11. Laborgerät (100) nach einem der Ansprüche 6 bis 10, **dadurch gekennzeichnet, dass** im Bereich der Vorderkante des Bodens (111) eine der stabilen Fassung der Frontwand (116) dienende, mit V- und/oder U- förmigem Einschnitt (124) versehene Positionierungsleiste (123) angeordnet ist.

12. Laborgerät (200) nach einem der Ansprüche 1 bis 5, **dadurch gekennzeichnet, dass** die Frontwand (216, 316, 416, 516) einstückig um eine Biegeachse biegeelastisch biegbar, oder mehrteilig, mehrere gelenkig miteinander verbundene Lamellen (290, 490, 590) aufweisend, ausgestaltet ist, und dass die mindestens eine Führungsvorrichtung eine Führungsschiene (225, 226) oder eine Führungsnut aufweist.

13. Laborgerät (100, 200) nach einem der Ansprüche 1 bis 12, **dadurch gekennzeichnet, dass** die Seitenwände (114, 115) und/oder die Abdeckung (113, 213) und/oder die Frontwand (116, 216, 316, 416, 516) und/oder die Positionierungsleiste (123) mit der Abdichtung des Arbeitsraums (110, 210) dienenden Dichtungen (127, 128, 129, 596) versehen sind.

14. Laborgerät (100, 200) nach einem der Ansprüche 1 bis 13, **dadurch gekennzeichnet, dass** die Abdeckung (113, 213) bezüglich des Gehäuses (120, 220) linear verschiebbar ausgebildet ist.

15. Laborgerät (100, 200) nach einem der Ansprüche 1 bis 14, **dadurch gekennzeichnet, dass** die Seitenwände (114, 115) und/oder die Abdeckung (113, 213) und/oder die Frontwand (116, 216, 316, 416, 516) mit mindestens einem Antrieb verbunden sind.

## Claims

1. Laboratory instrument (100, 200) with a housing (120, 220) containing a weighing cell and with a working compartment (110, 210) which is delimited by a floor (111, 211), a top cover (113, 213), a rear wall (112, 212), a front wall (116, 216, 316, 416, 516), and two sidewalls (114, 115) which are slidable in a linear movement between an open position and a closed position, further with a load receiver (150) which is arranged in the working compartment (110, 210) and connected to the weighing cell, **characterized in that** the laboratory instrument (100, 200) has at least one guiding device in an arrangement where the front wall (116, 216, 316, 416, 516), or several parts of the front wall (116, 216, 316, 416, 516) that are coupled to each other, are guided by the guiding device so that they can slide in a linear movement as well as swivel in an angular movement between an open position and a closed position, with the result that the working compartment (110, 210) is accessible from three sides when the sidewalls (114, 115) and the front wall (116, 216, 316, 416, 516) are simultaneously at least at intermediate positions.

2. Laboratory instrument (100, 200) according to claim 1, **characterized in that** the swivel angle (α, β) of the front wall (116, 216, 316, 416, 516), or the swivel angles (α, β) of individual portions of the front wall (116, 216, 316, 416, 516) relative to the housing (120, 220) are dependent on the linear displacement distance (s) of the front wall (116, 216, 316, 416, 516).

3. Laboratory instrument (100, 200) according to claim 1 or 2, **characterized in that** the rear wall (112, 212) and the floor (111, 211) of the working compartment (110, 210) are wall portions of the housing (120, 220).

4. Laboratory instrument (100, 200) according to one of the claims 1 to 3, **characterized in that** the at least one guiding device has at least one horizontally oriented swivel axis Y.

5. Laboratory instrument (100, 200) according to one of the claims 1 to 3, **characterized in that** the at least one guiding device has at least one vertically oriented swivel axis Z.

6. Laboratory instrument (100) according to one of the claims 1 to 5, **characterized in that** the front wall (116) is configured as a plate-shaped rigid unit, and that the guiding device comprises at least one swivel-pivoted linear guide (125, 126) of the plate-shaped front wall (116) and also at least one guide means (130) which is arranged between the front wall (116) and the housing (120) and serves to control the swivel movement dependent on the linear displacement distance.

7. Laboratory instrument (100, 200) according to claim 6, **characterized in that** the at least one swivel-pivoted linear guide (125, 126) is arranged in the area of a front edge (117) or in the area of a lateral edge of the top cover (113).

8. Laboratory instrument (100, 200) according to claim 6 or 7, **characterized in that** the guide means (130) is a swiveling connector link, a guiding rail, a pull-cord arrangement or a guide groove with a guide body.

9. Laboratory instrument (100, 200) according to claim 6 or 7, **characterized in that** the guide means (130) is a drive mechanism control device by means of which the swiveling movement of a swivel drive source of the front wall can be controlled dependent on the linear displacement movement of a linear drive source of the front wall.

10. Laboratory instrument (100) according to one of the claims 6 to 9, **characterized in that** the at least one swivel-pivoted linear guide (125, 126) comprises a swivel pivot and at least one guide rail, guide groove, guide roller or guide body serving to guide the linear movement of the front wall (116).

11. Laboratory instrument (100) according to one of the claims 6 to 10, **characterized in that** a positioning ledge (123) with a V-shaped and/or U-shaped groove 124 which serves to provide a stable seat for the front wall (116) is arranged in the area of the front edge of the floor (111).

12. Laboratory instrument (200) according to one of the claims 1 to 5, **characterized in that** the front wall (216, 316, 416, 516) is designed either as a single piece with the flexibility to bend elastically, or in multi-part configuration with a plurality of lamellar sections (290, 490, 590) that are articulately connected to each other, and that the at least one guiding device comprises a guide track (225, 226) or a guide groove.

13. Laboratory instrument (100, 200) according to one of the claims 1 to 12, **characterized in that** the sidewalls (114, 115) and/or the top cover (113, 213) and/or the front wall (116, 216, 316, 416, 516) and/or the positioning ledge (123) are provided with seals (127, 128, 129, 596) which serve to seal the working compartment (110, 210).

14. Laboratory instrument (100, 200) according to one of the claims 1 to 13, **characterized in that** the top cover (113, 213) is designed with the capability of linear sliding movement relative to the housing (120, 220).

15. Laboratory instrument (100, 200) according to one of the claims 1 to 14, **characterized in that** the sidewalls (114, 115) and/or the top cover (113, 213) and/or the front wall (116, 216, 316, 416, 516) are connected to at least one drive mechanism.

## Revendications

1. Appareil de laboratoire (100, 200) comprenant un boîtier (120, 220) contenant une cellule de pesage et un espace de travail (110, 210) délimité par un fond (111, 211), par un recouvrement (113, 213), par une paroi arrière (112, 212), par une paroi avant (116, 216, 316, 416, 516) et par deux parois latérales (114, 115) coulissant de façon linéaire entre une position ouverte et une position fermée, et un récepteur de charge (150) disposé dans l'espace de travail (110, 210) et relié à la cellule de pesage, **caractérisé en ce que** l'appareil de laboratoire (100, 200) présente au moins un dispositif de guidage, la paroi avant (116, 216, 316, 416, 516) ou plusieurs zones, couplées les unes avec les autres, de la paroi avant (116, 216, 316, 416, 516) étant guidées au moyen du dispositif de guidage, entre une position ouverte et une position fermée et de façon basculante, l'espace de travail (110, 210) étant accessible par trois côtés de paroi, les parois latérales (114, 115) et la paroi avant (116, 216, 316, 416, 516) étant simultanément au moins dans une position intermédiaire.

2. Appareil de laboratoire (100, 200) selon la revendication 1, **caractérisé en ce que** l'angle de pivotement (α, β) de la paroi avant (116, 216, 316, 416, 516) par rapport au boîtier (120, 220) ou les angles de pivotement (α, β) de zones individuelles de la paroi avant (116, 216, 316, 416, 516) par rapport au boîtier (120, 220) sont dépendants du tronçon de déplacement (s) linéaire de la paroi avant (116, 216, 316, 416, 516).

3. Appareil de laboratoire (100, 200) selon la revendication 1 ou 2, **caractérisé en ce que** la paroi avant (112, 212) et le sol (111, 211) de l'espace de travail (110, 210) sont des parties de paroi du boîtier (120, 220).

4. Appareil de laboratoire (100, 200) selon l'une quelconque des revendications 1 à 3, **caractérisé en ce que** le au moins un dispositif de guidage présente au moins un axe de pivotement Y disposé horizontalement.

5. Appareil de laboratoire (100, 200) selon l'une quelconque des revendications 1 à 3, **caractérisé en ce que** le au moins un dispositif de guidage présente au moins un axe de pivotement Z disposé verticalement.

6. Appareil de laboratoire (100) selon l'une quelconque des revendications 1 à 5, **caractérisé en ce que** la paroi avant (116) est conçue sous forme d'unité en forme de plaque et rigide et le dispositif de guidage présente au moins un guide linéaire (125, 126) pivotant de la paroi avant (116) en forme de plaque, et au moins un moyen de guidage (130) disposé entre la paroi avant (116) et le boîtier (120), servant à la commande du mouvement de pivotement en fonction du déplacement linéaire.

7. Appareil de laboratoire (100, 200) selon la revendication 6, **caractérisé en ce que** le au moins un guide linéaire (125, 126) pivotant est disposé dans la zone d'une arête avant (117) ou dans la zone d'une arête latérale du recouvrement (113).

8. Appareil de laboratoire (100, 200) selon la revendication 6 ou 7, **caractérisé en ce que** le moyen de guidage (130) est une patte de basculement, un rail de guidage, une commande à câble ou une rainure de guidage avec corps de guidage.

9. Appareil de laboratoire (100, 200) selon la revendication 6 ou 7, **caractérisé en ce que** le moyen de guidage (130) est une commande d'entraînement, au moyen de laquelle le mouvement de pivotement d'une commande de pivotement de la paroi avant peut être commandé en fonction du mouvement de déplacement linéaire d'un entraînement linéaire de la paroi avant.

10. Appareil de laboratoire (100) selon l'une quelconque des revendications 6 à 9, **caractérisé en ce que** le au moins un guide linéaire (125, 126) pivotant présente un palier basculant et au moins un rail de guidage, une rainure de guidage, un rouleau de guidage, servant au guidage linéaire de la paroi avant (116), ou un corps de guidage.

11. Appareil de laboratoire (100) selon l'une quelconque des revendications 6 à 10, **caractérisé en ce qu'**une baguette de positionnement (123) servant au montage stable de la paroi avant (116), dotée d'entaille (124) en V et/ou en U, est disposée dans la zone de l'arête avant du sol (111).

12. Appareil de laboratoire (200) selon l'une quelconque des revendications 1 à 5, **caractérisé en ce que** la paroi avant (216, 316, 416, 516) est conçue d'une seule pièce de façon à pouvoir plier de façon élastique en flexion autour d'un axe de flexion ou en plusieurs parties, présentant plusieurs lamelles (290, 490, 590) reliées de façon articulée les unes avec les autres, et **en ce que** le au moins un dispositif de guidage présente un rail de guidage (225, 226) ou une rainure de guidage.

13. Appareil de laboratoire (100, 200) selon l'une quelconque des revendications 1 à 12, **caractérisé en ce que** les parois latérales (114, 115) et/ou le recouvrement (113, 213) et/ou la paroi avant (116, 216, 316, 416, 516) et/ou la baguette de positionnement (123) sont dotés de joints (127, 128, 129, 596) servant à l'étanchéité de l'espace de travail (110, 210).

14. Appareil de laboratoire (100, 200) selon l'une quelconque des revendications 1 à 13, **caractérisé en ce que** le recouvrement (113, 213) est conçu de façon à pouvoir coulisser linéairement par rapport au boîtier (120, 220).

15. Appareil de laboratoire (100, 200) selon l'une quelconque des revendications 1 à 14, **caractérisé en ce que** les parois latérales (114, 115) et/ou le recouvrement (113, 213) et/ou la paroi avant (116, 216, 316, 416, 516) sont reliés à au moins un entraînement.
